# EUROPEAN PATENT SPECIFICATION

(11) **EP 3 591 951 B1**
(45) Date of publication and mention of the grant of the patent: **24.06.2020**
(21) Application number: 19184308.5
(22) Date of filing: 04.07.2019
(51) Int. Cl.: H04M 1/725

(54) **METHOD FOR CONFIGURING THE CONNECTION OF PORTABLE TERMINALS TO A FIXED TERMINAL AND SYSTEM THEREOF**
VERFAHREN ZUM KONFIGURIEREN DER VERBINDUNG VON TRAGBAREN ENDGERÄTEN MIT EINEM FESTEN ENDGERÄT UND SYSTEM DAFÜR
PROCÉDÉ POUR CONFIGURER LA CONNEXION DE TERMINAUX PORTABLES SUR UN TERMINAL FIXE ET SYSTÈME ASSOCIÉ

(30) Priority: 05.07.2018 IT 201800006957
(43) Date of publication of application: 08.01.2020
(73) Proprietor: Vox S.p.A., 06128 Perugia (IT)
(72) Inventor: SOUSA, Alexandre, 06128 Perugia (IT); MUCHAXO, Antonio, 06128 Perugia (IT); EPIFANI, Elio, 06128 Perugia (IT)
(74) Representative: Tiburzi, Andrea

(56) References cited:
- EP-A1- 2 391 102
- WO-A1-98/28937
- US-B1- 6 236 859

## Description

The present invention relates to a method for configuring the connection of portable terminals to a fixed terminal and system thereof.

More specifically, the invention concerns a method for assigning user selectable identification numbers to fixed terminals, in order to allow portable terminals to select the desired user selectable identification number to receive an audio signal from the corresponding fixed or chosen terminal, which has a high flexibility in setting-up groups, so as to be particularly suited for tour groups, wherein one tour guide has to transmit an audio signal for example to a plurality of tourists.

In the following, the description will be directed to radiocommunication network in wireless audio system, but it is clear that the same should not be considered limited to this specific use.

In the tour guide field, radio systems are used, where a plurality of networks are foreseen, each one comprising portable peripherals or parts connected with a related fixed terminal or part.

In particular, the use of radio receivers distributed to the participants of a tour, who are in radio connection with a transmitter of a relevant guide, is well known. In this way, when the guide explains the tour by means of a microphone, the participants can listen him or her in real time.

From an operating standpoint, it can happen that the participants of a group associated with a guide can change during the tour. Therefore, each receiver must be easily programmable so as to possibly receive audio from another guide transmitter (namely the fixed terminal of the system) of a plurality of transmitters.

Hence, in a touristic trip a plurality of networks related to the respective fixed terminals can likely overlap. This means that the radio connections operate each with different carrier frequencies and/or in different time slots.

In such systems the portable terminal (the receiver of each tourist) should be able to quickly and swiftly move from one fixed terminal (the transmitter of a tour guide) to another fixed terminal (the transmitter of another tour guide). This happens, as mentioned, for example when a tour group changes from one guide to another guide, for example to follow a different part of a tour.

In the systems according to the prior art, this shift is supported by scanning for another fixed terminal (a new transmitter of another guide), locking to it, checking whether this is the correct fixed terminal and going through the registration process in an "under-the-hood" automated manner.

Such process, although automatic, is time consuming, thus rendering the user interface often unusable. Also, the process however differs in nature from what is desirable in a tour guide wireless audio system.

From the technical standpoint, tour guide systems where the tour guide may change during a tour visit is not addressed adequately by the in-market solutions, as they rely on the standard DECT registration process.

One of the technical problems is achieving the objective to "mimic" a classical channel list (from the analogue world) and present such type of interface to the users. Hence, fast channel switching is thus a condition for an adequate solution.

The difficulty arises from the stages of the registration process, before the audio can be connected, which include:
- scanning;
- locking;
- registration.

One of the main problem is therefore to expedite the time from user interface channel change, until receiving audio from the selected channel.

The relevant prior art also includes the patent US 6236859 B1 and the patent application WO 98/28937 A1.

In view of the above, it is an object of the present invention to provide a method for assigning user selectable identification numbers to fixed terminals in order to allow portable terminals to select the desired fixed terminal associated to the specific user selectable identification number.

It is also object of the invention to provide a method for quickening the association of a portable part to different fixed terminals, which is very simple for the user.

It is therefore a specific object of the present invention a method for assigning user selectable identification number to each one of a plurality of fixed terminals, in order to allow one or more portable terminals to select the desired user selectable identification number to receive the relevant data or audio signal from the corresponding fixed terminal (2) via radio frequency communication standard, wherein said radio frequency communication standard comprises DECT - Digital Enhanced Cordless Telecommunications - standard protocol, and wherein said method comprises the following steps: A. setting said user selectable identification number information for each fixed terminals; B. transmitting, by each fixed terminal, a first broadcast control signal comprising a respective RFPI (Radio Fixed Part Identity) code of said DECT standard protocol, wherein said user selectable identification number is encoded in the last 8 bits of said RFPI code, corresponding to the Radio fixed Part Number (RPN); C. selecting by said portable terminal a fixed terminal by selecting the relevant user selectable identification number; D. periodically transmitting by each fixed terminal a second broadcast control signal comprising a verification code, wherein each verification code of each of said fixed terminal is univocally associated to each one of the user selectable identification numbers, so that in case of said fixed terminal does not transmit said second broadcast control signal after a predetermined time interval, said fixed terminal will be discarded by each one of said portable terminal, by which said fixed terminal has been selected in said selecting step C; and E. confirming by said portable terminals whether the fixed terminal is the correct one, by matching said verification code received by said second broadcast control signal with the selected received selectable identification number associated to the selected fixed terminal, so that in case of the match is negative, said fixed terminal will be discarded by each one of said portable terminal.

Always according to the invention, said verification code may be said user selectable identification number.

Still according to the invention, said broadcast control signals may be also encoded in a MAC (Medium Access Control) message.

Advantageously according to the invention, said fixed terminal may comprise a transmitter, for transmitting signals; and said method may further comprise the step of synchronizing said portable terminal with said transmitter of said fixed terminal.

Further according to the invention, said method may further comprise the step of starting receiving and activating the audio or data signal.

Always according to the invention, said DECT standard may comprise ARI (Access Rights Identity) B class identifier.

Still according to the invention, in case of more than one fixed terminal with the same user selectable identification number information is found, a portable terminal may connect to the first fixed terminal found.

Preferably according to the invention, said DECT standard protocol may comprise a control field and a signal or data field, and said selectable identification number and said verification code may be encoded in said control field.

It is further object of the present invention a telecommunication system comprising at least one fixed terminal, provided with a transmitter, and one or more portable terminals, connectable to said a relevant fixed terminal, wherein said at least one fixed terminal and said one or more portable terminals (3) are configured to execute the method according to the any one of the preceding claims.

The present invention will be now described, for illustrative but not limitative purposes, according to its preferred embodiments, with particular reference to the figures of the enclosed drawings, wherein:
Figure 1 shows a scheme of the registration method of a portable terminal and a fixed terminal by DECT standard according to the prior art;
Figure 2 shows the structure of the RFPI (Radio Fixed Part Identity) in the DECT standard;
Figure 3 shows a telecommunication system operating according to the method according to the present invention; and
Figure 4 shows a flowchart of the connection or matching process of a portable terminal with a fixed terminal according to the method of the present invention.

In the various figures, similar terms will be indicated by the same reference numbers.

The Digital Enhanced Cordless Telecommunications (DECT), usually known by the acronym DECT, is a standard primarily used for creating cordless telephone systems. It originated in Europe, where it is the universal standard, replacing earlier cordless phone standards, such as 900 MHz CT1 and CT2.

In Europe, the DECT protocol operates in the range of 1800 MHz to 1900 MHz.

The DECT standard is usable in a number of different applications.

DECT standard comprises a first control field, wherein control data can be encoded and multiplexed, and a data field, wherein data, such as an audio signal, can be broadcasted.

More specifically, a telecommunication system based on DECT standard works in a star topology, where a fixed terminal can be connected to one or more portable terminals.

In particular, in the network setup there is an association/registration of one or more portable terminals (also called portable part) to a fixed terminal (also called fixed part). Usually, after one or more portable terminals have been associated to the fixed terminal (e.g. the base), setting up the network, the devices above remain associated for the subsequent operations, without disassociating. This is not desirable in communication systems that require a certain degree of flexibility, such as in tour guide.

In this latter specific situation, each participant of a tour is provided with a portable terminal to listen the tour guide explanations, and the guide is associated the fixed terminal, by which it transmits the audio signal.

Also, as said, the composition of the group can change during the tour and thus the telecommunication system needs to be flexible, namely it should be capable of changing its topology or configuration in a smooth and simple way.

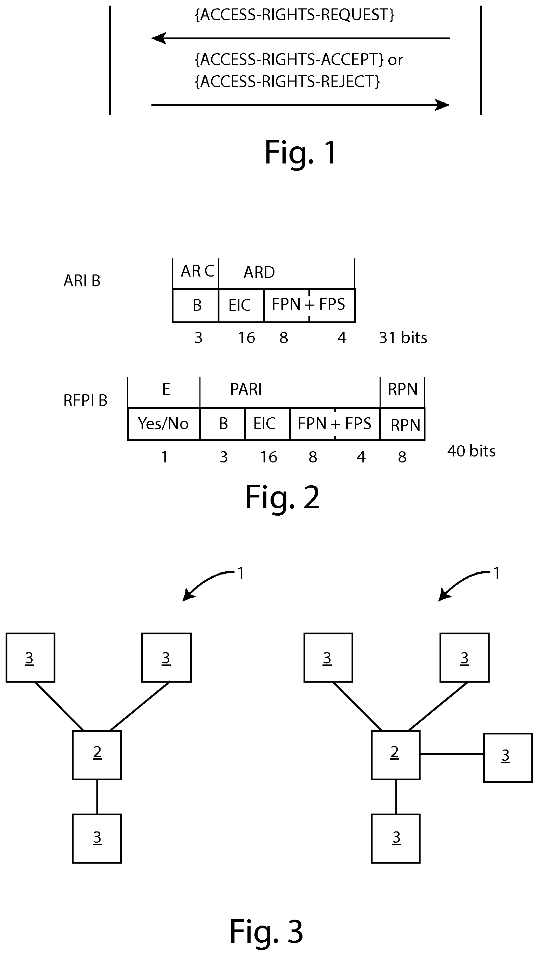

As is well known, the standard DECT registration method involves:
1. "Access rights requests supported" bit active in the "higher layer capabilities" (ref. ETSI ETS 300 175 - 5 edition 2017-11, Annex F - F.1). These are broadcast attributes of the fixed terminal of the system that instruct the portable terminals PT that they can gain access to this fixed terminal by going through the access rights procedure.
2. when locking to a fixed terminal with such bit set active, the portable terminal will establish a connection to the fixed terminal and exchange messages as defined in ETSI ETS 300 175 - 5 edition 2017-11, section 13.5 and schematically shown in Figure 1.

DECT standard is featured by a multiplexing scheme for data transmission. In particular, DECT standard operates both as a multicarrier frequency division multiple access (FDMA) and time division multiple access (TDMA) system.

The FDMA access provides up to 10 frequency channels, while the TDMA access provides 24 time slots (2x12 slots) per every frame of 10 ms.

More specifically, each time slot can be allocated to a specific portable terminal and the DECT base station transmits a "beacon signal", so that portable terminals connected to the base station are synchronized and are ready to take a call.

Moreover, when a portable terminal receives a call, it transmits data back to the base station during the allocated timeslot for said portable terminal.

In order to fulfill the flexibility requirements mentioned above, the solution according to the invention is that of mapping an arbitrary identification number associated to the transmission channel of each fixed terminal, after being properly set, into the lower bits of the fixed terminal identifier code, as described in depth below. This is done in DECT standard by resorting to class ARI B identifiers. These are defined in ETSI ETS 300 175-6, as shown in Figure 2.

More specifically, according to DECT standard, each fixed terminal is identified by an ARI B RFPI (Radio Fixed Part Identity), which is a 40-bit number mainly composed of a 16-bit Equipment Installer's Code (EIC), an 8-bit Fixed Part Number (FPN), a 4-bit Fixed Part sub-Number and an 8-bit Radio fixed Part Number (RPN).

The composition of the RFPI and the formal relation of each part with the ARI B class identifier is provided in Figure 2.

The first 4 bits of the RFPI are reserved for the E bit and the class type. The composition of the RFPI and the formal relation of each part with the Access Rights Class (ARC), Access Rights Details (ARD) and Primary Access Rights Identity (PARI) fields is shown in Figure 2.

The RFPI number is thus used for the unambiguous identification of a fixed terminal (also called base station in the field).

Referring to figure 3, two telecommunication networks 1 are shown, each one provided with a fixed terminal 2. Each fixed terminal 2 is also connected to a relevant plurality of portable terminals 3.

Each telecommunication network 1 can be associated to a tour group. In particular, the portable terminals 3 are associated to the tour participants, while the fixed terminal 2 is associated to the tour guide.

The telecommunication system 1 does not use any connections (which are typically considered as bidirectional links between two or more terminals) between fixed terminals 2 and portable terminals 3.

Each fixed terminal 2 broadcasts data signals and audio signals to the plurality of portable terminals 3, whether or not there is a portable terminal 3. Hence, the fixed terminals 2 are not aware of the presence (or absence) of the portable terminals 3.

It is necessary that each user or participant with his or her portable terminal 3 connects with a fixed terminal 2 of the desired tour guide. To this end, each tour guide fixed terminal 2 is associated a specific channel, which is encoded, as said above, into the last bits of the fixed terminal 2 identifier code, and in particular into the (8-bit long) RPN code of the RFPI, thus realizing a user selectable identification number.

Said channel is periodically set in the fixed terminal 2, by the fixed terminal 2 user (namely, in a tour guide, the guide), and communicated to the users of the portable terminals 3.

The users the portable terminals 3 are associated to e.g. the tourists, after being aware of the channel number (namely user selectable identification number), to connect to the desired fixed terminal 2.

Furthermore, each channel number is also encoded in any other allowed MAC (Medium Access Control) message.

In the present embodiment, still referring to figure 2, ARI B access rights class has been implemented. This access right class is usually reserved for complex private installations such as LANs and various types of multi-cell PABXs.

In these environments it is necessary to be able to install new, or replace old, equipment without changing the Access Rights Identities ARIs or the Radio Fixed Part Identities (RFPIs). This indicates that ARI B is mainly a system identity, that follows a system and not a specific equipment (see the above mentioned ETSI ETS 300 175-6 edition 2017-11). Therefore, this access right class is indicated also to be used in flexible telecommunication networks, likewise those necessary in tour groups.

The operation of each telecommunication system 1 described above is as follows.

The portable terminal 3 can search for a fixed terminal 2 from a given or selected "channel" (the user selectable identification number), by searching which fixed terminal 2 has its RPN (namely, last eight bits of a class B RFPI, as shown in Figure 2) matching with the intended "channel". In particular, a selectable transmission channel, namely said user selectable identification number, is assigned (and it can be changed whenever it is desired) to each one of said plurality of fixed terminals 2. For instance, and in some embodiments, said user selectable identification number can be any integer number between 1 and 99.

Each fixed terminal 2 transmits a first broadcast control signal, encoding the above user selectable identification number into the last byte (8-bit long RPN code) of the RFPI. As a result, each fixed terminal 2 is univocally associated with a respective user selectable identification number.

In case of more than one fixed terminal 2 with the same last bits in its identifier (namely, with the same "channel" or, better, with the same user selectable identification number) a nearby portable terminal 3 switching channel will lock to the first fixed terminal 2 found.

This is a similar situation to receiving from two transmitters on the same analog channel, with the difference that, in this case, one of the guides will be selected randomly and received without interference.

Subsequently, each one of the fixed terminals 2 also periodically broadcasts a second broadcast control signal, properly multiplexed in the control field of DECT standard, comprising a verification code, wherein each verification code of each of said fixed terminal 2 is univocally associated to each one of the user selectable identification numbers. Common DECT systems do not provide a second broadcast control signal, carrying a verification code univocally associated to the user selectable identification number, used in this context for the portable terminals 3 to verify and keep the connection with a specific fixed terminal 2.

As a result, the portable terminals 3 can confirm that the fixed terminal 2 is part of the system and the right fixed terminal 2 selected, and not any other DECT fixed part that happens to have the last 8 bits of the RFPI, matching the "channel", namely the user selectable identification number encoded in the the Radio fixed Part Number (RPN).

In fact, the fixed terminals 2 transmit the second broadcast control signals to the portable terminals 3 at predetermined time intervals.

As mentioned above, the second control signal broadcasted by the fixed terminals 2 comprises, in the present embodiment, a verification code, that is univocally associated to the user selectable identification number, which, in its turn, is associated to (and set by) the fixed terminal 2.

Said verification code is, in the embodiment disclosed, equal to the user selectable identification number.

In other embodiments, the second control signal, periodically broadcasted by the fixed terminals 2, comprises a verification code that is associated by a function of said user selectable identification number, which in its turn is associated to (and set by) the fixed terminal 2.

Hence, the periodic broadcasting of said second control signal, which is multiplexed in the control field of DECT standard, avoids any connection between portable terminals 2 and DECT fixed parts, which happen to have the last 8 bits of the RFPI, matching the user selectable identification number.

In case of a standard DECT fixed terminal 2 does not send such second broadcast control signal after said predetermined time interval, it will be discarded or disconnected.

Such second broadcast control signal is sent on any allowed MAC message.

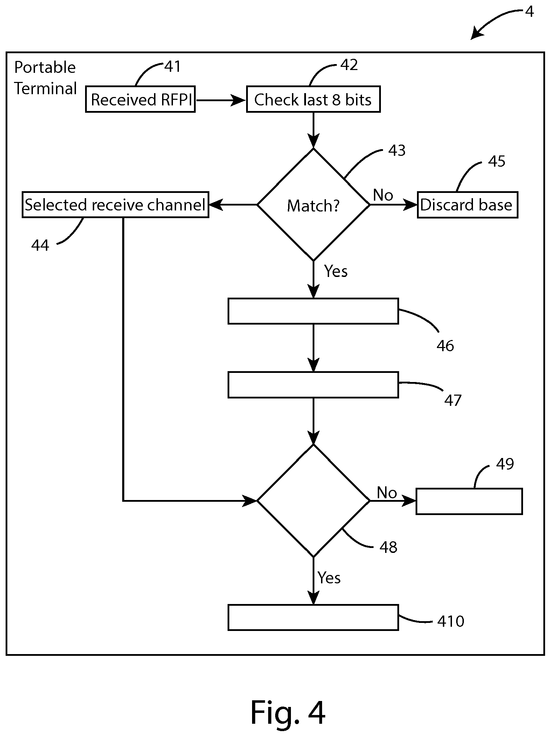

Referring now to Figure 4, a flowchart of the connection or matching procedure 4 of the portable terminal 3, operating as a receiver, is shown. The portable terminal 3 is provided with control means (not shown in the figures), for running the process underlined in the flowchart.

In particular, whenever the portable terminal 3 has to match with a fixed terminal 2, in step 41 it receives the RFPI code, previously set in (each) fixed terminal 2. Usually a fixed terminal 2 continuously advertise its presence sending 100 DECT frames per second, namely, in regular intervals of 10 milliseconds.

In the case at issue, the portable terminal 3 checks the last 8 bits of the RFPI code in step 42.

Then, in step 43, on the basis of the selection, made in step 44, of the user selectable identification number associated to the fixed terminal 2 to which it is desired to connect, said portable terminal 3 evaluates whether the last 8 bits of the RFPI code is the same of the selected channel (which is univocally associated with the user selectable identification number). If the comparison is negative, namely if the last 8 bits of the RFPI code do not express the same user selectable identification number, the portable terminal 3 in step 45 discards the fixed terminal 2 from which the RFPI code has been received. Otherwise, in step 46 the portable terminal 3 synchronizes with the transmitter of the fixed terminal 2, locking to said fixed terminal 2.

In step 47 the portable terminal 3 checks the identification number selected by the user comprised in the second broadcast control signal.

This check is required in order to avoid the portable terminal 3 to access a normal DECT Fixed Part that happens to have the last 8 bits of the RFPI matching the desired transmission channel.

The selected received selectable identification number, which is actually a system identifier, is compared in step 48 with the verification code comprised in the second broadcast control signal. If the match is negative, in step 49 the portable terminal 3 discards the fixed terminal 2, from which it received the RFPI code. Conversely, if the match is positive, in step 410 the portable terminal 3 starts receiving the signals from the fixed terminal 2 from which it received the RFPI code, activating at the same time the audio, so as to listen to the information of the tour guide provided and transmitted through the fixed terminal 2.

In addition, based on the above, the transmission of said first control signal and second control signal by the fixed terminals 2 allows the portable terminals 3 to distinguish between fixed terminals 2 belonging to the telecommunication system 1 from any other terminal or base belonging to common DECT systems.

In addition, as opposed to known systems, during the above operations there is no data transmission from the portable terminal 3 to the fixed terminal 2.

In the present description, the term "signal" referred to the first control signal and to the second control signal both broadcasted by the fixed terminal 2 can also be intended as a "message".

An advantage of the present invention is that of providing a flexible system, so that the number of portable terminals connected to the fixed terminal can be quickly changed.

An additional advantage of the present invention is that of being particularly suited for realizing the radio systems for tourist tours, where groups of tourists provided with portable terminals connected to relevant fixed terminals, can change from tour to tour.

A further advantage of the present invention is that of transmitting data between fixed terminals and portable terminals more efficiently, thereby decreasing transmission costs.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for assigning user selectable identification number to each one of a plurality of fixed terminals (2), in order to allow one or more portable terminals (3) to select the desired user selectable identification number to receive the relevant data or audio signal from the corresponding fixed terminal (2) via radio frequency communication standard,
wherein said radio frequency communication standard comprises DECT - Digital Enhanced Cordless Telecommunications - standard protocol, and
wherein said method comprises the following steps:
A. setting said user selectable identification number information for each fixed terminals (2);
B. transmitting, by each fixed terminal (2), a first broadcast control signal comprising a respective RFPI, Radio Fixed Part Identity, code of said DECT standard protocol, wherein said user selectable identification number is encoded in the last 8 bits of said RFPI code, corresponding to the Radio fixed Part Number, PPN;
C. selecting by said portable terminal (3) a fixed terminal (2) by selecting the relevant user selectable identification number;
D. periodically transmitting by each fixed terminal (2) a second broadcast control signal comprising a verification code, wherein each verification code of each of said fixed terminal (2) is univocally associated to each one of the user selectable identification numbers, so that in case of said fixed terminal (2) does not transmit said second broadcast control signal after a predetermined time interval, said fixed terminal (2) will be discarded by each one of said portable terminal (3,) by which said fixed terminal (2) has been selected in said selecting step C; and
E. confirming by said portable terminals (3) whether the fixed terminal (2) is the correct one, by matching said verification code received by said second broadcast control signal with the selected received selectable identification number associated to the selected fixed terminal (2), so that in case of the match is negative, said fixed terminal (2) will be discarded by each one of said portable terminal (3).

2. Method according to the preceding claim, **characterized in that** said verification code is said user selectable identification number.

3. Method according to any one of the preceding claim, **characterized in that** said broadcast control signals is also encoded in a MAC, Medium Access Control, message.

4. Method according to any one of the preceding claims, **characterized**
**in that** said fixed terminal (2) comprises a transmitter, for transmitting signals; and
**in that** said method further comprises the step (46) of synchronizing said portable terminal (3) with said transmitter of said fixed terminal (2).

5. Method according to any one of the preceding claims, **characterized in that** said method further comprises the step (410) of starting receiving and activating the audio or data signal.

6. Method according to any one of the preceding claims, when dependent on claim 1, **characterized in that** said DECT standard comprises ARI, Access Rights Identity, B class identifier.

7. Method according to any one of the preceding claims, **characterized in that** in case of more than one fixed terminal (2) with the same user selectable identification number information is found, a portable terminal (3) connects to the first fixed terminal (2) found.

8. Method according to any one of the preceding claims, **characterized**
**in that** said DECT standard protocol comprises a control field and a signal or data field, and
**in that** said selectable identification number and said verification code are encoded in said control field.

9. Telecommunication system (1) comprising
at least one fixed terminal (2), provided with a transmitter, and
one or more portable terminals (3), connectable to said a relevant fixed terminal (2),
wherein said at least one fixed terminal (2) and said one or more portable terminals (3) are configured to execute the method according to the any one of the preceding claims.

## Patentansprüche

1. Verfahren zum Zuweisen einer anwenderwählbaren Identifikationsnummer zu jedem einer Vielzahl stationären Endgeräten (2), um einem oder mehreren tragbaren Endgeräten (3) zu erlauben, die gewünschte anwenderwählbare Identifikationsnummer auszuwählen, um die relevanten Daten oder Audiosignal von dem entsprechenden stationären Endgerät (2) über Funkfrequenzkommunikationsstandard zu empfangen,
wobei der Funkfrequenzkommunikationsstandard DECT - Digital Enhanced Cordless Telecommunications (verbesserte digitale Schnurlos-Kommunikationen) - Standardprotokoll umfasst und
wobei das Verfahren die folgenden Schritte umfasst:
A. Einstellen der anwenderwählbaren Identifikationsnummerninformationen für jedes stationäre Endgerät (2);
B. Übertragen, durch jedes stationäre Endgerät (2), eines ersten Rundfunksteuerungssignals, das einen jeweiligen RFPI, Radio Fixed Part Identity, Code des DECT Standardprotokolls umfasst, wobei die anwenderwählbare Identifikationsnummer in den letzten 8 Bits des RFPI Codes encodiert ist, entsprechend der Radio fixed Part Number, RPN;
C. Auswählen durch das tragbare Endgerät (3) eines stationären Endgeräts (2), indem die relevante anwenderwählbare Identifikationsnummer ausgewählt wird;
D. periodisches Übertragen durch jedes stationäre Endgerät (2) eines zweiten Rundfunksteuerungssignals, das einen Verifizierungscode umfasst, wobei jeder Verifizierungscode jedes stationären Endgeräts (2) eindeutig mit jeweils einer der anwenderwählbaren Identifikationsnummern verknüpft ist, sodass in dem Fall, dass das stationäre Endgerät (2) das zweite Rundfunksteuerungssignal nach einem vorgegebenen Zeitintervall nicht überträgt, das stationäre Endgerät (2) von jedem der tragbaren Endgeräte (3) verworfen wird, bei dem das stationäre Endgerät (2) in dem Auswahlschritt C ausgewählt wurde; und
E. Bestätigen durch die tragbaren Endgeräte (3), ob das stationäre Endgerät (2) das richtige ist, indem der Verifizierungscode, der von dem zweiten Rundfunksteuerungssignal empfangen ist, mit der ausgewählten empfangenen wählbaren Identifikationsnummer abgeglichen wird, die mit dem ausgewählten stationären Endgerät (2) verknüpft ist, sodass im Fall, dass der Abgleich negativ ist, das stationäre Endgerät (2) von jedem der tragbaren Endgeräte (3) verworfen wird.

2. Verfahren nach dem vorstehenden Anspruch, **dadurch gekennzeichnet, dass** der Verifizierungscode die anwenderwählbare Identifikationsnummer ist.

3. Verfahren nach einem der vorstehenden Ansprüche, **dadurch gekennzeichnet, dass** die Rundfunksteuerungssignale auch in einer MAC, Medium Access Control (Medienzugriffsteuerung), Nachricht encodiert sind.

4. Verfahren nach einem der vorstehenden Ansprüche, **gekennzeichnet**
**dadurch, dass** das stationäre Endgerät (2) einen Sender zum Senden von Signalen umfasst; und
dadurch, dass das Verfahren weiter den Schritt (46) zum Synchronisieren des tragbaren Endgeräts (3) mit dem Sender des stationären Endgeräts (2) umfasst.

5. Verfahren ach einem der vorstehenden Ansprüche, **dadurch gekennzeichnet, dass** das Verfahren weiter den Schritt (410) zum Starten von Empfangen und Aktivieren des Audio- oder Datensignals umfasst.

6. Verfahren nach einem der vorstehenden Ansprüche, wenn von Anspruch 1 abhängig, **dadurch gekennzeichnet, dass** der DECT Standard ARI, Access Rights Identity, Klasse B Identifikator umfasst.

7. Verfahren nach einem der vorstehenden Ansprüche, **dadurch gekennzeichnet, dass** im Fall, dass mehr als ein stationäres Endgerät (2) mit denselben anwenderwählbaren Identifikationsnummerninformationen gefunden wird, ein tragbares Endgerät (3) sich mit dem ersten gefundenen stationären Endgerät (2) verbindet.

8. Verfahren nach einem der vorstehenden Ansprüche, **gekennzeichnet**
**dadurch, dass** das DECT Standardprotokoll ein Steuerungsfeld und ein Signal- oder Datenfeld umfasst, und
dadurch, dass die wählbare Identifikationsnummer und der Verifizierungscode in dem Steuerungsfeld encodiert sind.

9. Telekommunikationssystem (1), umfassend
mindestens ein stationäres Endgerät (2), das mit einem Sender bereitgestellt ist, und
ein oder mehrere tragbare Endgeräte (3), die mit einem relevanten stationären Endgerät (2) verbunden werden können,
wobei das mindestens eine stationäre Endgerät (2) und das eine oder die mehreren tragbaren Endgeräte (3) konfiguriert sind, das Verfahren nach einem der vorstehenden Ansprüche auszuführen.

## Revendications

1. Procédé d'attribution d'un numéro d'identification sélectionnable par l'utilisateur à chacun d'une pluralité de terminaux fixes (2), afin de permettre à un ou plusieurs terminaux portables (3) de sélectionner le numéro d'identification sélectionnable par l'utilisateur désiré pour recevoir le signal audio ou de données pertinent à partir du terminal fixe (2) correspondant via une norme de communication par fréquences radio,
dans lequel ladite norme de communication par fréquences radio comprend un protocole de norme de télécommunications numériques sans fil améliorées - DECT, et
dans lequel ledit procédé comprend les étapes suivantes :
A. le réglage de ladite information de numéro d'identification sélectionnable par l'utilisateur pour chaque terminal fixe (2) ;
B. la transmission, par chaque terminal fixe (2), d'un premier signal de commande de diffusion comprenant un code d'identité de partie fixe radio, RFPI, respectif dudit protocole de norme DECT, dans lequel ledit numéro d'identification sélectionnable par l'utilisateur est codé dans les 8 derniers bits dudit code RFPI, correspondant au numéro de partie fixe radio, RPN ;
C. la sélection par ledit terminal portable (3) d'un terminal fixe (2) en sélectionnant le numéro d'identification sélectionnable par l'utilisateur pertinent ;
D. la transmission périodique par chaque terminal fixe (2) d'un second signal de commande de diffusion comprenant un code de vérification, dans lequel chaque code de vérification de chacun dudit terminal fixe (2) est associé de manière univoque à chacun des numéros d'identification sélectionnables par l'utilisateur, de manière que, dans le cas où ledit terminal fixe (2) ne transmet pas ledit second signal de commande de diffusion après un intervalle de temps prédéterminé, ledit terminal fixe (2) sera rejeté par chacun dudit terminal portable (3), par lequel ledit terminal fixe (2) a été sélectionné dans ladite étape de sélection C ; et
E. la confirmation par lesdits terminaux portables (3) si le terminal fixe (2) est celui correct, en mettant en correspondance ledit code de vérification reçu par ledit second signal de commande de diffusion avec le numéro d'identification sélectionnable reçu sélectionné associé au terminal fixe (2) sélectionné, de manière que, dans le cas où la correspondance est négative, ledit terminal fixe (2) sera rejeté par chacun dudit terminal portable (3).

2. Procédé selon la revendication précédente, **caractérisé en ce que** ledit code de vérification est ledit numéro d'identification sélectionnable par l'utilisateur.

3. Procédé selon l'une quelconque des revendications précédentes, **caractérisé en ce que** ledit signal de commande de diffusion est également codé dans un message de commande d'accès au support, MAC.

4. Procédé selon l'une quelconque des revendications précédentes, **caractérisé**
**en ce que** ledit terminal fixe (2) comprend un émetteur pour transmettre des signaux ; et
**en ce que** ledit procédé comprend en outre l'étape (46) de synchronisation dudit terminal portable (3) avec ledit émetteur dudit terminal fixe (2).

5. Procédé selon l'une quelconque des revendications précédentes, **caractérisé en ce que** ledit procédé comprend en outre l'étape (410) de démarrage de la réception et l'activation du signal audio ou de données.

6. Procédé selon l'une quelconque des revendications précédentes, quand elle dépend de la revendication 1, **caractérisé en ce que** ladite norme DECT comprend un identificateur de classe B d'identité de droits d'accès, ARI.

7. Procédé selon l'une quelconque des revendications précédentes, **caractérisé en ce que**, dans le cas où plus d'un terminal fixe (2) avec la même information de numéro d'identification sélectionnable par l'utilisateur est trouvé, un terminal portable (3) se connecte au premier terminal fixe (2) trouvé.

8. Procédé selon l'une quelconque des revendications précédentes, **caractérisé**
**en ce que** ledit protocole de norme DECT comprend un champ de commande et un champ de données ou signal, et
**en ce que** ledit numéro d'identification sélectionnable et ledit code de vérification sont codés dans ledit champ de commande.

9. Système de télécommunication (1) comprenant
au moins un terminal fixe (2) muni d'un émetteur, et
un ou plusieurs terminaux portables (3) pouvant être connectés audit un terminal fixe (2) pertinent,
dans lequel ledit au moins un terminal fixe (2) et lesdits un ou plusieurs terminaux portables (3) sont configurés pour exécuter le procédé selon l'une quelconque des revendications précédentes.
